# EUROPEAN PATENT SPECIFICATION

(11) **EP 1 525 941 B1**
(45) Date of publication and mention of the grant of the patent: **03.04.2013**
(21) Application number: 04255556.5
(22) Date of filing: 14.09.2004
(51) Int. Cl.: B23K 26/14, B23K 26/32, B23K 26/38

(54) **A method of laser machining components having a protective surface coating**
Laserbearbeitungsverfahren von einem Bauteil mit einer Schutzbeschichtung
Méthode d'usinage laser d'un article avec un revêtement protecteur

(30) Priority: 20.09.2003 GB 0322090
(43) Date of publication of application: 27.04.2005
(73) Proprietor: ROLLS-ROYCE PLC, London, SW1E 6AT (GB)
(72) Inventor: Byrd, Pamela Jean, Coleford Glos BL16 7BU (GB)
(74) Representative: Tindall, Adam

(56) References cited:
- GB-A- 2 384 734
- US-A- 5 187 346
- US-A1- 2003 066 821
- US-B1- 6 329 015
- VANDERWERT T L ET AL: "LASER DRILLING EFFUSION COOLING HOLES IN LOW NOX TURBINE ENGINE COMPONENTS" ASME TURBO ASIA CONFERENCE, XX, XX, November 1996 (1996-11), pages 1-8, XP002925532
- LEHNER C ET AL: "LASERBOHREN VON KUEHL- UND SCHMIERLOECHERN" WERKSTATT UND BETRIEB, CARL HANSER VERLAG. MUNCHEN, DE, vol. 136, no. 6, June 2003 (2003-06), pages 59-61, XP001169399 ISSN: 0043-2792

## Description

This invention relates to laser machining a workpiece by laser cutting, welding or drilling, and more particularly to machining a workpiece having a protective surface coating.

Surface coatings are often applied to manufactured components to protect, and hence increase the operational life, of such components in use. Surface coatings may comprise one or more layers of coating material applied to a substrate material. The surface coating may be applied at any stage of manufacture, for example a coating may be applied to the raw material substrate from which the component is manufactured or to the finished component in a final manufacturing process.

Components of the turbine and combustion chamber of a modern gas turbine engine are often provided with a surface coating in the form of a thermal barrier coating which protects the metal substrate of the components from the high temperature combination and turbine gasses which they are exposed to during use.

Thermal barrier coatings comprise mainly a ceramic material which is bonded to the surface of the metal component to be protected. During the manufacture of these components it is often necessary to apply the coating and subsequently conduct further machining and/or joining processes on the coated workpiece. The thermal and mechanical stresses that are generated during these further manufacturing procedures can lead to cracks being formed in the coating which can propagate in the plane of the coating. If the cracks propagate over large areas the coating will delaminate and separate from the metal substrate in a process known as "spalling". This is a particular problem when drilling cooling holes in high temperature gas turbine components such as combustion chambers, NGV's, turbine blades and the like which are provided with a thermal barrier coating to protect the metal substrate from the effects of the high temperature combustion and turbine gasses.

Cracking and de-lamination of protective surface coatings such as thermal barrier coatings can be minimised during drilling and cutting operations by careful selection of machining parameters when the drilling or cutting operation is performed by a laser having normal to the surface of the component being drilled or cut. However, a problem exists when cooling holes or the like are laser drilled at low angles of incidence to the surface of a component having a thermal barrier coating. When drilling at low angles of incidence the gas pressure generated within the hole being drilled and the scouring effect of the melt eject material cause relatively large forces to act on the lip of the thermal barrier coating at the entry to the hole being drilled. This causes a large turning moment to be generated often leading to cracking and de-lamination of the thermal barrier coating. De-lamination is further encouraged by the generation of large temperature gradients at the interface of the coating and substrate material. Cracking and de-lamination of thermal barrier coatings has also been found where the component has been welded close to the coated area of the component, primarily due to the heat generated in the component during welding.

De-lamination of surface coatings following laser machining is usually difficult to detect by non-destructive methods since it does not immediately result in the coating falling off the substrate material. Cracking of the thermal barrier coating therefore often goes unrecognised during manufacturing.

Hitherto, the process of laser drilling film cooling holes and the like usually involves the use of a laser having a coaxial gas stream, that is to say a gas stream that is directed onto the surface of the component being drilled coaxial with the laser beam. The assist gas performs several functions, namely: it protects the focusing optics of the laser from weld spatter; it blows away molten material from the workpiece; it cools the workpiece, reducing the heat affected zone; where an active assist gas is used, for example oxygen, oxidation of the molten material is exothermic which increases the efficiency of the drilling process; and, where a passive shield gas is used, for example carbon dioxide or an inert gas, oxidation is prevented.

United States Patent No 5187346 (Bilge et al) discloses a means for welding steel sheets that have a protective coating of zinc, in which a cover (or assist) gas is directed towards the working-area.

United States Patent Application No 2003/0066821 (Wybrow et al) describes a method of laser drilling a hole in a workpiece with a ceramic coating by angling a laser to the surface of the workpiece and guiding the laser in a path to avoid damage to the ceramic coating.

The American Society of Mechanical Engineers publication no XP002925532 (Vanderwert et al) discloses a method of providing holes in a workpiece by angling a laser to the surface of the workpiece, and also employs an assist gas to purge the working area.

The Werkstatt und Betrieb publication no XP 001169399 discloses a means for laser drilling a workpiece by pulsing and trepanning a laser.

Hence there is a requirement for an improved method of laser machining a workpiece having a protective surface coating, for example a thermal barrier coating, which reduces theextent of de-lamination of the coating due to cracking of the coating where the laser is directed at angles other than perpendicular to the surface of the component to be machined.

According to an aspect of the invention there is provided a method of machining a workpiece having a protective surface coating, the said method comprising:
directing a laser beam at the surface of a workpiece to be cut, welded or drilled by the laser beam at an angle of inclination with respect to the said surface;
directing a jet of fluid towards the point of incidence of the laser beam on the surface of the workpiece; characterised in that the said jet of fluid is angled with respect to the said laser beam and the pressure of the jet is selected to begreater than or substantially equal to pressure generated by gases formed by the machining of theworkpiece such that mechanical and thermal stresses generated by the machining process are countered by the jet, and hence reduce delamination of the coating.

By directing the jet of fluid at an angle with respect to the laser beam onto the surface of the component being cut, welded or drilled, the jet is able to counteract the forces which tend to cause the layers to separate, that is to say the net forces experienced by thecoated workpiece, which cause cracking and de-lamination to occur, are reduced during the laser machining process. In this way the pressure acting on the surface of the coated component counters, to some extent, the mechanical and thermal stresses generated by the laser during the machining operation. In this respect the pressure of the jet acts to maintain the adhesion of the protective surface coating to the substrate material of the component being machined.

Preferably, the direction of the jet of fluid is substantially perpendicular to the angle of inclination of the laser beam. The jet of fluid may, however, be angled with respect to the laser beam between 30 and 120 degrees.

In preferred embodiments the angle of inclination of laser beam with espect to the surface of the workpiece is in the range of 30 to 70 degrees but typically the angle of the laser beam measured with respect to the surface of the workpiece is between 15 and 30 degrees. Thus, in embodiments where the inclination of the laser with respect to the surface is say for example 30 degrees the angle of the jet fluid is preferably 120 degrees as measured in the same direction as the angle of inclination of the beam with respect to the surface. The present invention also contemplates embodiments where the angle of the jet fluid is greater or less than 90° with respect to the inclination of the laser beam. For example, the jet fluid may be inclined with respect to the laser beam at an angle in the range of 45 to 130 degrees depending upon the inclination of the laser beam and the pressure of the jet fluid acting on the surface of the workpiece.

In preferred embodiments the pressure of the jet of fluid is substantially in the range 1 bar to 5 bar.

Preferably, the jet of fluid is a first jet and the method further comprises directing a second jet of fluid at the surface of the workpiece substantially in the direction of the laser beam. The second jet of fluid acts to protect the lens or lenses of the laser generating the laser beam from spatter, that is to say material ejected from the workpiece being machined by the laser beam. In preferred embodiments the second jet of fluid is substantially coaxial with the laser beam.

Preferably, the jet of fluid or jets of fluid comprise a gas. The gas may comprise oxygen such that the gas constitutes an active assist gas for increasing the efficiency of the laser machining process due to the exothermic oxidation of the molten material by the oxygen in the assist gas. In other embodiments the gas comprises a non-reactive shielding gas, including, for example carbon dioxide or an inert gas.

In one embodiment of the present invention the method comprises a laser drilling method where the workpiece is drilled by the laser beam.

The method of the present invention may involve machining a workpiece having a metal substrate and a protective coating comprising a ceramic material. The protective coating may comprise a thermal barrier coating bonded to a metal substrate. Components comprising a metal substrate and a thermal barrier coating are commonly found in gas turbine engines, for example combustor and turbine components which are coated with a thermal barrier coating to protect the metal substrate from the high temperature effects of the combustion and turbine gasses.

In an embodiment of the present invention, the method comprises laser-drilling film cooling holes in a gas turbine engine component, for example combustor or turbine components.

An embodiment of the present invention will now be more particularly described, by way of example only, with reference to the accompanying drawings, in which:
Figure 1 is a schematic representation of a laser machining method according to an embodiment of the present invention; and
Figure 2 shows a typical apparatus suitable for use in the method of the present invention.

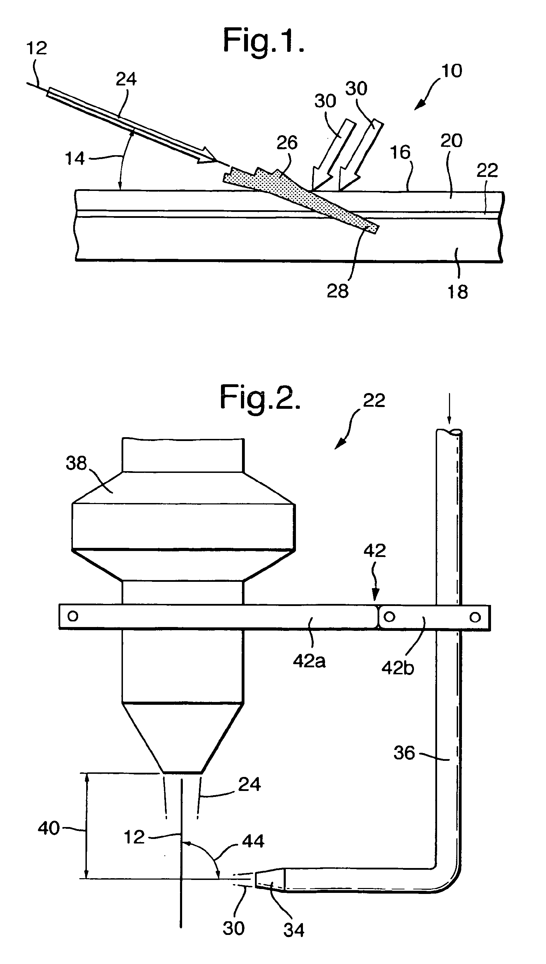

Referring to Figure 1, in an embodiment of the present invention a workpiece 10, in the form of a gas turbine engine component, is machined by a laser drilling apparatus (not shown) that generates a laser beam 12 at an angle of inclination 14 to the surface 16 of the workpiece component being drilled. The component 10 comprises a metal substrate 18 and a protective surface coating 20 which is a thermal barrier coating bonded to the metal substrate 18 at a substrate coating interface layer 22. The component 10 may, for example, be the wall of a combustion chamber in a gas turbine engine, a combustion chamber heatshield tile, a turbine nozzle guide vane or rotor blade in which a plurality of film cooling holes or the like are drilled through the layers 18, 20 and 22 for the passage of cooling air from one side of the component to the other.

In the drawing of Figure 1 the laser beam has penetrated the surface coating layer 20, the interface layer 22 and has entered the metal substrate 18.

The laser beam 12 is provided with a coaxial jet of gas 24 which acts to protect the focusing lens of the laser apparatus from the molten material, indicated at 26, that is ejected from the hole 28 being drilled by the laser 12. The coaxial jet of gas 24 also counteracts the pressure of the gases generated in the hole 28 along the axis of the laser beam. In order to prevent the pressure of the expanding gases generated in the hole being drilled from lifting the coating layer 22 from the metal substrate 18, due to the pressure differential between the gases in the hole being drilled and the surface 16 of the workpiece, a further jet of gas 30 is directed onto the surface 16 in the region of the hole being drilled. The pressure of the jet 30 is selected to be substantially equal to or slightly greater than the pressure generated by the gases in the hole being drilled.

In the embodiment shown the jet 30 is substantially perpendicular to the direction of the laser beam 12 such that the angle of inclination of the jet 30 with respect to the surface 16 is equal to the angle 14 of the laser beam with respect to the surface plus 90 degrees, that is when measured in the same clockwise direction in the drawing of Figure 1.

In the embodiment shown in Figure 1 the angle of inclination 14 of the laser beam 12 with respect to the surface 16 is typically 30 degrees and therefore the angle of inclination of the jet 30 is 120 degrees. However, it will be recognised that holes 28 having angles greater or lesser than 30 degrees with respect to the surface of the component may be drilled in accordance with the method of the present invention by adjusting the pressure of the jet 30 and also the area over which the jet acts for different angles of hole being drilled. For example, for angles shallower than 30 degrees a higher pressure jet 30 may be required over a greater surface area than for angles of the laser beam greater than 30 degrees. The exact parameters of the laser drilling method, for example pressures etc are easily determined by the skilled person.

Referring now to Figure 2, which shows a typical apparatus 32 suitable for use in the laser drilling method described with reference to Figure 1. In the apparatus of Figure 2 a gas delivery nozzle 34 is connected to a gas delivery pipe 36 for delivering high pressure gas to the nozzle 34 to generate the jet 30. The nozzle 34 and delivery pipe 36 are secured to the end of the lens 38 of a laser which generates the beam 12 for laser drilling. The height dimension between the end of the laser and the nozzle exit, as indicated by dimension 40 in the drawing, is adjustable by means of the delivery pipe 36 being slidably mounted at one end of an adjustable fixing bracket 42 connecting the nozzle gas delivery pipe to the light emitting end of the laser. The bracket 42 comprises a first part 42a connected to the end of the laser optics and a second part 42b on which the delivery pipe 36 is slidably mounted. The two parts 42a, 42b are pivotally connected together so that the angle 44 between the laser beam generated by the laser and the jet 30 can be adjusted over a range of angles from the position shown in the drawing where the nozzle exit is perpendicular to the direction of the laser beam 12. The height dimension 40 may be adjusted by repositioning the tube with respect to the bracket part 42b so that the nozzle 34 can be used with different focal length lenses of the laser.

Although aspects of the invention have been described with reference to the embodiment shown in the accompanying drawings, it is to be understood that the invention is not limited to the precise embodiment shown and that various changes and modifications may be effected without further inventive skill and effort. For example, the workpiece may comprise any component having a protective surface coating on a substrate of a different material. The workpiece may also comprise a component other than a gas turbine engine component and the method may alternatively be one of laser cutting or welding where it is also necessary to maintain the structural integrity of a coating with respect to the substrate material of the workpiece being machined. The angle of the jet of fluid with respect to the laser beam may be greater or less than 90 degrees depending upon the parameters of the laser machining process. Therefore, while the optic angle between the jet of fluid acting on the surface and the laser beam may be 90 degrees other angles may be used, particularly in situations where the special configuration of the workpiece and the machining apparatus require the angle to be other than 90 degrees.

## Claims

1. A method of machining a workpiece (10) having a protective surface coating (20), the said method comprising:
directing a laser beam (12) at the surface (16) of a workpiece (10) to be cut, welded or drilled by the laser beam (12) at an angle of inclination (14) with respect to the said surface (16);
directing a jet of fluid (30) towards the point of incidence of the laser beam (12) on the surface (16) of the workpiece (10); **characterised in that** the said jet of fluid (13) is angled with respect to the said laser beam (12) and the pressure of the jet (30) is selected to be greater than or substantially equal to pressure generated by gases formed by the machining of the workpiece (10) such that mechanical and thermal stresses generated by the machining process are countered by the jet (30), and hence reduce delamination of the coating (20).

2. A method as claimed in Claim 1 wherein the angle of inclination (14) of the said jet of fluid (30) with respect to the said surface (16) is such that the said jet (30) is substantially perpendicular to the direction of the laser beam (12).

3. A method as claimed in Claim 1 or Claim 2 wherein the angle of inclination (14) of the laser beam (12) with respect to the said surface (16) is in the range of 30 to 70 degrees.

4. A method as claimed in any preceding claim wherein the pressure of the said jet (30) is substantially in the range 1 bar to 5 bar.

5. A method as claimed in any preceding claim wherein the said jet of fluid (30) comprises a first jet and the said method further comprises directing a second jet of fluid (24) at the surface (16) of the workpiece substantially in the direction of the said laser beam (12).

6. A method as claimed in Claim 5 wherein the said second jet of fluid (24) is substantially coaxial with the said laser beam (12).

7. A method as claimed in any preceding claim wherein the said fluid or fluids (24,30) comprise a gas.

8. A method as claimed in Claim 7 wherein the said gas (24,30) comprises oxygen.

9. A method as claimed in Claim 7 wherein the said gas (24,30) comprises a nonreactive shielding gas.

10. A method as claimed in any preceding claim wherein the workpiece (10) is drilled by the said laser (12).

11. A method as claimed in any preceding claim wherein the workpiece (10) comprises a metal substrate (18) and the said protective coating (20) comprises a ceramic material.

12. A method as claimed in Claim 11 wherein the protective coating (20) comprises a thermal barrier coating.

13. A method as claimed in any preceding claim wherein the said workpiece (10) comprises a gas turbine engine component.

14. A method as claimed in Claim 13 wherein the workpiece comprises a gas turbine combustor or turbine component.

15. A method as claimed in Claim 14 wherein the method comprises laser drilling of film cooling holes.

## Patentansprüche

1. Verfahren zur Bearbeitung eines Werkstücks (10) mit einem schützenden Oberflächenüberzug (20), wobei das Verfahren umfasst:
Richten eines Laserstrahls (12) auf die Oberfläche (16) des zu schneidenden, schweißenden oder bohrenden Werkstücks (10) durch den Laserstrahl (12) unter einem Neigungswinkel (14) mit Bezug auf die genannte Oberfläche (16),
Richten eines Strömungsmittelstrahls (30) auf den Einfallspunkt des Laserstrahls (12) auf der Oberfläche (16) des Werkstücks (10), **dadurch gekennzeichnet, dass** der Strömungsmittelstrahl (13) mit Bezug auf den Laserstrahl (12) abgewinkelt ist und der Druck des Strahls (30) so gewählt ist, dass er größer als oder im wesentlichen gleich wie der Druck ist, der von durch die Bearbeitung des Werkstücks (10) gebildeten Gasen erzeugt wird, so dass den durch den Bearbeitungsprozess erzeugten mechanischen und thermischen Spannungen durch den Strahl (30) entgegengewirkt wird und dadurch die Abschälung des Überzugs (20) reduziert wird.

2. Verfahren nach Anspruch 1, wobei der Neigungswinkel (14) des genannten Strömungsmittelstrahls (20) mit Bezug auf die Oberfläche (16) derart ist, dass der Strahl (30) im wesentlichen senkrecht zur Richtung des Laserstrahls (12) verläuft.

3. Verfahren nach Anspruch 1 oder Anspruch 2, wobei der Neigungswinkel (14) des Laserstrahls (12) mit Bezug auf die genannte Oberfläche (16) im Bereich von 30 bis 70 Grad liegt.

4. Verfahren nach irgendeinem vorhergehenden Anspruch, wobei der Druck des genannten Strahls (30) im wesentlichen im Bereich von 1 bar bis 5 bar liegt.

5. Verfahren nach irgendeinem vorhergehenden Anspruch, wobei der Strömungsmittelstrahl (30) einen ersten Strahl umfasst und das Verfahren weiter das Richten eines zweiten Strömungsmittelstrahls (24) auf die Oberfläche (16) des Werkstücks im wesentlichen in der Richtung des Laserstrahls (12) umfasst.

6. Verfahren nach Anspruch 5, wobei der zweite Strömungsmittelstrahl (24) im wesentlichen koaxial mit dem Laserstrahl (12) verläuft.

7. Verfahren nach irgendeinem vorhergehenden Anspruch, wobei das Strömungsmittel oder die Strömungsmittel (24, 30) ein Gas umfassen.

8. Verfahren nach Anspruch 7, wobei das genannte Gas (24, 30) Sauerstoff ist.

9. Verfahren nach Anspruch 7, wobei das genannte Gas (24, 30) ein nichtreaktives Schutzgas ist.

10. Verfahren nach irgendeinem vorhergehenden Anspruch, wobei das Werkstück (10) durch den Laserstrahl (12) gebohrt wird.

11. Verfahren nach irgendeinem vorhergehenden Anspruch, wobei das Werkstück (10) ein Metallsubstrat (18) hat und der schützende Überzug (20) ein keramisches Material ist.

12. Verfahren nach Anspruch 11, wobei der schützende Überzug (20) eine Wärmesperrenbeschichtung ist.

13. Verfahren nach irgendeinem vorhergehenden Anspruch, wobei das Werkstück (10) eine Gasturbinentriebwerkskomponente ist.

14. Verfahren nach Anspruch 13, wobei das Werkstück eine Gasturbinenbrenner- oder Turbinenkomponente ist.

15. Verfahren nach Anspruch 14, wobei das Verfahren das Laserbohren von Filmkühlbohrungen umfasst.

## Revendications

1. Procédé d'usinage d'une pièce (10) ayant un revêtement protecteur en surface (20), ledit procédé comprenant :
l'orientation d'un faisceau laser (12) vers la surface (16) d'une pièce (10) à couper, souder ou percer par le faisceau laser (12) à un angle d'inclinaison (14) par rapport à ladite surface (16) ;
la projection d'un jet de fluide (30) vers le point d'incidence de faisceau laser (12) sur la surface (16) de la pièce (10) ; **caractérisé en ce que** ledit jet de fluide (30) est incliné par rapport audit faisceau laser (12) et que la pression du jet (30) est choisie de façon à être supérieure ou sensiblement égale à la pression générée par les gaz formés par l'usinage de la pièce (10), pour que les contraintes mécaniques et thermiques générées par le procédé d'usinage soient contrées par le jet (30) et donc que le délaminage du revêtement (20) soit réduit.

2. Procédé selon la revendication 1, dans lequel l'angle d'inclinaison (14) dudit jet de fluide (30) par rapport à ladite surface (16) est tel que ledit jet (30) est sensiblement perpendiculaire à la direction du faisceau laser (12).

3. Procédé selon la revendication 1 ou la revendication 2, dans lequel l'angle d'inclinaison (14) dudit faisceau laser (12) par rapport à ladite surface (16) se situe dans la plage allant de 30 à 70 degrés.

4. Procédé selon l'une quelconque des revendications précédentes, dans lequel la pression dudit jet (30) est essentiellement dans la plage allant de 1 bar à 5 bars.

5. Procédé selon l'une quelconque des revendications précédentes, dans lequel ledit jet de fluide (30) comprend un premier jet et ledit procédé comprend en outre la projection d'un second jet de fluide (24) sur la surface (16) de la pièce essentiellement dans la direction dudit faisceau laser (12).

6. Procédé selon la revendication 5, dans lequel ledit second jet de fluide (24) est sensiblement coaxial avec ledit faisceau laser (12).

7. Procédé selon l'une quelconque des revendications précédentes, dans lequel ledit fluide ou lesdits fluides (24, 30) comprennent un gaz.

8. Procédé selon la revendication 7, dans lequel ledit gaz (24, 30) comprend de l'oxygène.

9. Procédé selon la revendication 7, dans lequel ledit gaz (24, 30) comprend un gaz non réactif de protection.

10. Procédé selon l'une quelconque des revendications précédentes, dans lequel la pièce (10) est percée par ledit laser (12).

11. Procédé selon l'une quelconque des revendications précédentes, dans lequel la pièce (10) comprend un substrat métallique (18) et ledit revêtement protecteur (20) comprend un matériau céramique.

12. Procédé selon la revendication 11, dans lequel le revêtement protecteur (20) comprend un revêtement de barrière thermique.

13. Procédé selon l'une quelconque des revendications précédentes, dans lequel ladite pièce (10) comprend un composant de moteur de turbine à gaz.

14. Procédé selon la revendication 13, dans lequel la pièce comprend un composant de turbine ou de chambre de combustion de turbine à gaz.

15. Procédé selon la revendication 14, dans lequel le procédé comprend le perçage par laser d'orifices de refroidissement pelliculaire.
